(19) Europäisches Patentamt
European Patent Office
Office européen des brevets

(11) **EP 2 821 893 A2**

(12) **DEMANDE DE BREVET EUROPEEN**

(43) Date de publication:
**07.01.2015 Bulletin 2015/02**

(51) Int Cl.:
***G06F 3/01*** *(2006.01)*        ***G06F 3/038*** *(2013.01)*
***G06F 3/0362*** *(2013.01)*      ***G06F 3/0346*** *(2013.01)*

(21) Numéro de dépôt: **14174617.2**

(22) Date de dépôt: **26.06.2014**

| | |
|---|---|
| (84) Etats contractants désignés:<br>**AL AT BE BG CH CY CZ DE DK EE ES FI FR GB GR HR HU IE IS IT LI LT LU LV MC MK MT NL NO PL PT RO RS SE SI SK SM TR**<br>Etats d'extension désignés:<br>**BA ME**<br><br>(30) Priorité: **27.06.2013 FR 1356205** | (71) Demandeur: **Orange**<br>**75015 Paris (FR)**<br><br>(72) Inventeurs:<br>• **Lefebvre, Grégoire**<br>  **38920 Crolles (FR)**<br>• **Moritz, Rick**<br>  **38000 Grenoble (FR)** |

(54) **Procédé de reconnaissance d'un geste et d'un contexte, dispositif, terminal d'utilisateur et programme d'ordinateur associés**

(57)     L'invention concerne un procédé de reconnaissance d'un geste instrumenté, exécuté par un utilisateur à l'aide de son terminal mobile, ledit terminal comprenant une pluralité de capteurs de mesures physiques parmi lesquels des capteurs de navigation inertielle, un module de détection d'un geste utile par analyse des mesures physiques collectées par les capteurs de navigation inertielle et un module de détection d'un contexte d'usage par analyse des mesures physiques collectées par lesdits capteurs.

**Description**

1. **Domaine de l'invention**

Le domaine de l'invention est celui des interactions gestuelles, et plus particulièrement de la reconnaissance d'un geste instrumenté, exécuté par un utilisateur à l'aide de son terminal mobile, en prenant en compte le contexte d'usage de l'utilisateur.

2. **Présentation de l'art antérieur**

Nous assistons ces dernières années à l'explosion des usages autour des interactions dites « naturelles ». L'utilisateur peut ainsi piloter son terminal ou un poste distant avec des gestes du quotidien pour accéder simplement et rapidement à une information ou à un service. Ces gestes peuvent être exécutés en 2D comme des dessins sur un écran tactile, interprétés comme une commande pour le système, ou bien exécutés en 3D, réalisés dans l'air, tel un raccourci gestuel pour activer une fonctionnalité. Les gestes en 3D peuvent être interprétés par la capture du mouvement de son terminal mobile tenu en main grâce à des capteurs inertiels (accéléromètre, gyromètre, magnétomètre). On parle de gestes instrumentés.

Généralement, ces gestes sont reconnus par comparaison des caractéristiques issues de mesures physiques collectées par les capteurs inertiels avec celles des modèles prédéfinis. Un critère de distance est généralement utilisé dans l'espace des caractéristiques pour classifier un geste inconnu. De tels modèles de gestes sont classiquement modélisés dans des environnements neutres qui n'entravent ni l'acquisition ni la reconnaissance des gestes.

Pourtant, du fait du caractère nativement nomade de son terminal mobile, l'utilisateur est amené à exécuter des gestes en mobilité, dans des contextes d'usage extrêmement variés, ce qui n'est pas sans conséquence sur l'exécution du geste et sur son interprétation.

Premièrement, la gestuelle de l'utilisateur peut être fortement contrainte par son environnement. En effet, selon que l'utilisateur est assis dans un fauteuil de cinéma, à vélo ou encore dans un bus, il n'aura pas la même liberté de mouvement, ni la même attention à accorder à l'exécution de son geste. Il en résulte que la forme et la qualité de son geste varient inévitablement en fonction du contexte d'usage.

Deuxièmement, les contraintes physiques liées à son environnement interfèrent sur les capteurs inertiels de son terminal mobile qui mesurent des valeurs physiques de l'environnement. Les vibrations induites par le déplacement du bus ou du vélo sont capturées par l'accéléromètre en même temps que les mouvements de l'utilisateur sur son terminal mobile. Elles constituent donc un bruit pour la reconnaissance de gestes.

Troisièmement, selon ses habitudes, son humeur, ses envies, son état de stress ou encore son niveau d'expérience, l'utilisateur va produire un même geste de différentes manières au cours du temps. Par exemple, il exécutera plutôt des gestes lents dans les moments calmes et des gestes rapides et saccadés dans les moments de stress. Son expertise gestuelle évoluant au cours du temps, un geste initialement saccadé deviendra petit à petit plus fluide. Une telle variabilité des mouvements inertiels d'un utilisateur dans le temps vient aussi altérer la reconnaissance d'un geste.

On connait de la demande de brevet US 2012/0016641 un système de reconnaissance de gestes comprenant un module de reconnaissance de gestes apte à reconnaître un geste parmi un ensemble de modèles de gestes prédéfinis et d'un contexte d'usage de l'utilisateur apte à identifier le contexte d'usage courant parmi un ensemble de modèles de contextes d'usages prédéfinis. La connaissance d'un tel contexte est utilisée pour filtrer l'ensemble de gestes et n'en retenir qu'un sous-ensemble autorisé pour le contexte identifié. Par exemple, lorsque le contexte identifié correspond à l'arrivée d'un appel téléphonique, les seuls gestes autorisés sont ceux qui sont associés aux actions de prise, de rejet ou encore de transfert d'appel. Ainsi, la prise en compte du contexte particulier d'usage de l'utilisateur permet une reconnaissance plus simple et plus efficace du geste exécuté par l'utilisateur dans ce contexte.

3. **Inconvénients de l'art antérieur**

Un inconvénient de ce système est qu'il ne prend en compte qu'un ensemble figé de modèles de contextes d'usage prédéfinis, indépendamment des habitudes personnelles de l'utilisateur et de son potentiel d'évolution.

4. **Exposé de l'invention**

L'invention vient améliorer la situation à l'aide d'un procédé de reconnaissance d'un geste instrumenté, exécuté par un utilisateur à l'aide de son terminal mobile, ledit terminal comprenant un module de mesures comprenant une pluralité de capteurs de mesures physiques parmi lesquels des capteurs de navigation inertielle.

Selon l'invention, ledit procédé comprend les étapes suivantes,

- reconnaissance d'au moins un geste utile détecté par analyse de mesures physiques collectées par lesdits capteurs et par comparaison des mesures analysées à des caractéristiques de modèles de gestes d'une base de gestes,
- reconnaissance d'au moins un contexte d'usage, dit contexte courant, détecté par analyse de mesures physiques collectées par lesdits capteurs et par similarité des mesures physiques analysées avec celles de contextes d'usage précédemment enregistrés dans une base de contextes,
- en cas de reconnaissance d'au moins un geste utile et d'au moins un contexte d'usage précédemment enregistré, recherche d'au moins un enregistrement correspondant à un couple formé d'un desdits au moins un geste utile et d'un desdits au moins contexte d'usage reconnus, ledit couple comprenant une probabilité d'apparition, ladite probabilité ayant été calculée en fonction d'un nombre d'occurrences de reconnaissance dudit couple sur une période de temps passée;
- - dans le cas où au moins un enregistrement a été trouvé, décision de validation d'un desdits au moins un couples enregistrés au moins en fonction de la valeur de la probabilité d'apparition obtenue ;
- en cas de reconnaissance d'au moins un geste utile et de non reconnaissance d'au moins un contexte d'usage courant, demande de validation du geste reconnu à l'utilisateur ;
- en cas de validation par l'utilisateur, enregistrement des valeurs de mesures physiques analysées en tant que nouveau contexte d'usage dans la base de contextes et enregistrement du nouveau couple formé du geste reconnu et du nouveau contexte d'usage, avec une probabilité d'apparition associée calculée à partir de l'occurrence courante.

Avec l'invention, la reconnaissance du contexte d'usage du geste exécuté par l'utilisateur se base sur l'analyse de l'historique des contextes de cet utilisateur dans le temps, par recherche de similarité dans son historique d'usage. Aucune intervention de l'utilisateur n'est requise pour labéliser les contextes d'usage analysés.

La prise en compte des habitudes de l'utilisateur est rendue possible par la mémorisation au cours du temps de couples geste/contexte d'usage rencontrés.

La mémorisation d'un nouveau contexte et d'un nouveau couple au cours du temps permet en outre de prendre en compte l'évolution des usages de l'utilisateur. Ainsi, contrairement à l'art antérieur, un contexte d'usage particulier n'est pas associé à un sous-ensemble prédéfini de gestes.

L'invention repose sur une approche tout-à-fait nouvelle et inventive de la reconnaissance d'un geste instrumenté exécuté par un utilisateur, qui consiste à rechercher un couple geste de référence/contexte d'usage mémorisé correspondant au geste courant et au contexte courant reconnus et à valider ou invalider la reconnaissance du geste courant dans le contexte d'usage courant au moins en fonction de la probabilité d'apparition associée à ce couple.

Ainsi, plutôt que de se limiter à des modèles de contextes d'usage standardisés pour renforcer la reconnaissance de gestes exécutés par l'utilisateur, l'invention s'appuie sur une analyse et une mémorisation de l'historique de ses usages, ce qui permet la mise en oeuvre d'une reconnaissance des gestes exécutés par l'utilisateur en fonction de contextes d'usages personnalisés.

Selon un aspect de l'invention, lorsque plusieurs couples enregistrés ont été trouvés pour un même geste, le procédé comprend une étape de sélection des couples dont la probabilité d'apparition associée est supérieure à un premier seuil de confiance prédéterminé.

Suite à l'exécution d'un geste par l'utilisateur dans un contexte d'usage courant, une liste de plusieurs gestes candidats, de même qu'une liste de plusieurs contextes d'usage candidats pouvant leur être associés.

Un avantage est de présenter une liste ordonnée des couples mémorisés en fonction d'une valeur de probabilité d'apparition décroissante, ce qui permet de ne soumettre à validation que le ou les couples gestes/contextes les plus probables.

Selon un autre aspect de l'invention, lorsque plusieurs couples enregistrés ont été trouvés, l'étape de décision comprend en outre une sous-étape d'évaluation desdits couples par comparaison à un deuxième seuil de confiance supérieur au premier.

Ce deuxième seuil est choisi suffisamment élevé pour qu'au plus un couple enregistré puisse le passer. Ainsi, le système peut il accorder une grande confiance à ce couple.

Selon un autre aspect de l'invention, lorsque la probabilité d'apparition obtenue pour ledit au moins un couple est inférieure au deuxième seuil prédéterminé, l'étape de décision comprend en outre une demande de confirmation de validation du geste reconnu à l'utilisateur.

Lorsque le système n'accorde pas une confiance suffisamment grande à un couple enregistré en base, il consulte l'utilisateur. Ceci permet de limiter le risque de prendre une mauvaise décision.

Selon un autre aspect de l'invention, ledit procédé comprend une étape de mise à jour de la probabilité d'apparition associée audit au moins un couple trouvé, en fonction de la décision prise pour l'occurrence courante.

Si une décision de validation est prise, la probabilité d'apparition du couple concerné est renforcée. Si au contraire une décision d'invalidation est prise, elle est diminuée.

Un avantage est de faire évoluer les probabilités d'apparition des couples geste, contexte d'usage en même temps que les usages et habitudes de l'utilisateur. Ainsi, l'historique pris en compte par le système évolue avec le temps et les probabilités d'apparition prennent en compte les nouvelles occurrences de couples geste/contexte.

Selon un autre aspect de l'invention, l'étape de reconnaissance d'un contexte d'usage comprend les sous-étapes suivantes :

- Discrétisation des mesures physiques acquises par la pluralité de capteurs, un nombre prédéfini de valeurs discrètes possibles étant associé à un capteur ;
- stockage des valeurs discrètes obtenues dans une matrice de contexte d'usage courant, comprenant un nombre de colonnes égal au nombre de capteurs et un nombre de lignes égal au nombre de mesures effectuées par un capteur pendant la période de temps prédéterminée ;
- alignement des valeurs de mesures de la matrice du contexte d'usage courant avec des mesures d'une matrice de référence stockée en mémoire par application d'opérations d'édition aux mesures de ladite matrice courante, une opération d'édition ayant un coût d'édition associé ;
- calcul d'un tableau de coûts d'alignement, le coût d'alignement d'une mesure $j$ d'un capteur $i$ étant au moins fonction d'une mesure de similarité entre la mesure $j$ et une autre mesure du capteur $i$ et du coût d'édition associé à l'opération d'édition appliquée à ladite mesure $j$ ;
- sélection du contexte d'usage de référence dont la matrice de référence a obtenu les coûts d'alignement les plus élevés.

Cette technique est basée sur l'alignement de deux matrices, celle correspondant aux mesures physiques du contexte d'usage courant et celle correspondant aux mesures physiques d'un contexte d'usage stocké en mémoire. Elle évalue la similarité entre les deux contextes en fonction du coût de cet alignement. Un avantage de cette technique est qu'elle est capable de prendre en compte les spécificités des mesures issues de différents capteurs, telles que par exemple leur nature physique, dans l'évaluation de la similarité et de réaliser des alignements à partir de mesures physiques acquises sur des périodes de temps de longueurs différentes. Elle permet aussi de donner plus de poids à certaines mesures qu'à d'autres.

Selon un autre aspect de l'invention, les opérations d'édition appartiennent au groupe comprenant au moins :

- une insertion d'une mesure entre deux mesures successives du capteur $i$ ;
- une suppression de la mesure $j$ ;
- un remplacement de la mesure $j$ par une autre mesure.

Cette technique consiste à faire évoluer la matrice de contexte courant vers une matrice de contexte de référence en appliquant des opérations d'édition simples, comme l'insertion, la suppression et le remplacement, chacune étant associée à un coût d'édition. La mesure de similarité entre deux matrices est liée au coût global de l'alignement, la matrice courante étant d'autant plus similaire à la matrice de référence considérée que l'alignement a nécessité moins d'opérations d'édition.

Selon encore un autre aspect de l'invention, l'étape de reconnaissance d'un contexte d'usage comprend en outre les sous-étapes suivantes :

- sélection d'alignements locaux candidats par capteur dans le tableau de coûts d'alignements, les candidats sélectionnés ayant un coût d'alignement supérieur à un seuil prédéterminé ;
- regroupement des alignements locaux candidats pour la pluralité de capteurs pour former un motif de contexte d'usage ;
- regroupement des motifs de contexte d'usage formés à partir de mesures de similarité entre matrices de caractères, pour former des contextes ; et
- labellisation automatique des contextes formés.

Cette technique de regroupement (« clustering », en anglais) permet de sélectionner plusieurs alignements pour les regrouper en motifs de contexte. Les motifs de contexte sont regroupés par similarité et est représentés par un motif référent dont le label est généré automatiquement.

Le procédé de reconnaissance d'un geste qui vient d'être décrit dans ses différents modes de réalisations peut être mis en oeuvre par un dispositif de reconnaissance d'un geste selon l'invention.

Un tel dispositif comprend les modules suivants :

- reconnaissance d'au moins un geste utile détecté par comparaison des mesures analysées à celles de modèles de gestes d'une base de gestes,
- reconnaissance d'au moins un contexte d'usage, dit contexte courant, par similarité des mesures physiques analysées avec celles de contextes d'usage précédemment enregistrés dans une base de contextes,

- recherche d'au moins un enregistrement correspondant à un couple formé d'un geste utile et d'un contexte d'usage reconnus, apte à être mis en oeuvre en cas de reconnaissance d'au moins un geste utile et d'au moins un contexte d'usage précédemment enregistré, ;

- obtention d'une probabilité d'apparition par couple correspondant, ladite probabilité ayant été calculée en fonction d'un nombre d'occurrences de détection dudit couple sur une période de temps passée, apte à être mis en oeuvre dans le cas où au moins un enregistrement a été trouvé,;

- décision de validation d'un des au moins un couples au moins en fonction de la valeur de la probabilité d'apparition obtenue ;

- en cas de reconnaissance d'au moins un geste utile et de non reconnaissance d'au moins un contexte d'usage courant, demande (E8$_2$) de validation du geste reconnu à l'utilisateur ;

- en cas de validation par l'utilisateur, enregistrement (STORE CU) des valeurs de mesures physiques analysées en tant que nouveau contexte d'usage dans la base de contextes et enregistrement (STORE C) du nouveau couple formé du geste reconnu et du nouveau contexte d'usage, avec une probabilité d'apparition associée calculée à partir de l'occurrence courante.

L'invention concerne aussi un équipement terminal, comprenant un module de mesures comprenant une pluralité de capteurs de mesures physiques parmi lesquels des capteurs de navigation inertielle, un module de détection d'un geste utile par analyse des mesures physiques collectées par les capteurs de navigation inertielle, un module de détection d'un contexte d'usage par analyse des mesures physiques collectées par lesdits capteurs.

Un tel terminal est particulier en ce qu'il comprend le dispositif de reconnaissance d'un geste qui vient d'être décrit.

L'invention concerne aussi un système de reconnaissance de gestes comprenant une base de données de contexte d'usage comprenant des enregistrements de contextes d'usages rencontrés par l'utilisateur, une base de données de couples geste/contexte d'usage comprenant des enregistrements de couples de gestes et de contexte d'usage reconnus, une probabilité d'apparition étant associée audit couple, et un terminal d'utilisateur selon l'invention apte à transmettre des données auxdites bases et à accéder à leurs enregistrements.

L'invention concerne encore un programme d'ordinateur comportant des instructions pour la mise en oeuvre des étapes d'un procédé de reconnaissance d'un geste tel que décrit précédemment, lorsque ce programme est exécuté par un processeur. Un tel programme peut utiliser n'importe quel langage de programmation. Il peut être téléchargé depuis un réseau de communication et/ou enregistré sur un support lisible par ordinateur.

L'invention se rapporte enfin à un support de stockage, lisible par un processeur, intégré ou non au dispositif de reconnaissance d'un geste selon l'invention, éventuellement amovible, mémorisant un programme d'ordinateur mettant en oeuvre un procédé de segmentation temporelle tel que décrit précédemment.

Les supports d'enregistrement mentionnés ci-avant peuvent être n'importe quelle entité ou dispositif capable de stocker le programme et lisible par un équipement terminal. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

### 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure **1** présente de façon schématique un exemple de geste exécuté par un utilisateur à l'aide de son terminal mobile dans un contexte d'usage particulier ;

- la figure **2** présente de façon schématique un terminal d'utilisateur apte à reconnaître un geste instrumenté selon l'art antérieur ;

- la figure **3** présente de façon schématique un diagramme d'étapes d'un procédé de reconnaissance de geste selon un mode de réalisation de l'invention ;

- la figure **4** présente un exemple de similarité de contextes d'usage entre un contexte d'usage courant A et un contexte de référence B, pour n mesures physiques collectées par des capteurs ;

- la figure **5** présente de façon schématique les étapes d'un algorithme de similarité mis en oeuvre pour reconnaitre un contexte d'usage selon un exemple d'implémentation de l'invention ;

- -la figure **6** illustre un exemple de regroupement d'alignements locaux obtenus à partir de l'algorithme de similarité précédent ;

- la figure **7** illustre un exemple de regroupement d'alignements globaux obtenus à partir de l'algorithme de similarité précédent ; et
- la figure **8** décrit un exemple de structure matérielle d'un dispositif de reconnaissance d'un geste instrumenté selon un mode de réalisation de l'invention.

## 7. Description d'un mode de réalisation particulier de l'invention

Le principe général de l'invention repose sur la mémorisation au cours du temps de couples formés d'un geste reconnu et d'un contexte d'usage de ce geste, propre à l'utilisateur, sur l'association d'une probabilité d'apparition à ce couple et sur l'utilisation de cette probabilité d'apparition pour valider la reconnaissance d'un geste courant dans un contexte d'usage courant.

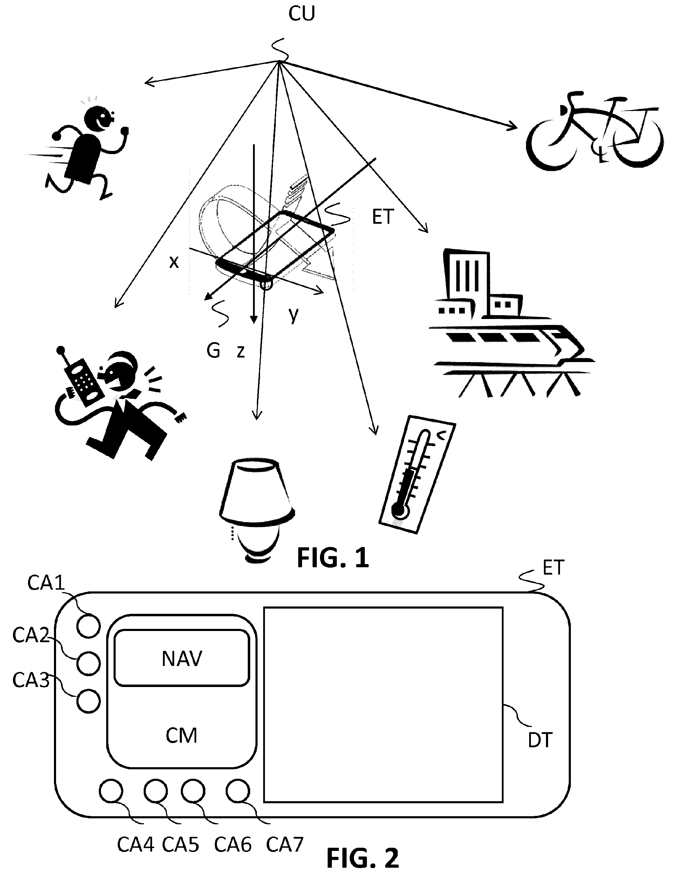

En relation avec les Figures **1** et **2,** on présente un équipement terminal ET, par exemple un téléphone mobile de type téléphone intelligent (« *smartphone* », en anglais) ou une tablette, à l'aide duquel un utilisateur est en train d'exécuter un geste G.

Le terminal ET est aussi équipé d'un module de mesure CM comprenant une pluralité de capteurs CA1 à CAN de mesures physiques variées, avec N entier, comme par exemple un capteur luxmètre apte à mesurer l'intensité de la lumière ambiante, un capteur de température, un microphone apte à détecter un signal sonore environnant ou encore un module de localisation de type GPS (« *Global Positioning System* » en anglais). Parmi ces capteurs, les capteurs C1 à C3 collectent plus spécifiquement des mesures accélérométriques destinées à un module de navigation inertielle NAV, par exemple intégré au module CM.

Ces trois capteurs accéléromètres CA1 à CA3 sont aptes à mesurer l'accélération linéaire du terminal selon trois axes orthogonaux, un capteur gyromètre apte à mesurer une vitesse angulaire du terminal ET et un capteur magnétomètre apte à mesurer un champ magnétique du terminal ET. Les valeurs de mesures physiques remontées par le capteur de navigation inertielle permettent de détecter et de caractériser le geste G.

Ce module de mesures CM fournit donc au terminal un ensemble de valeurs de mesures physiques dont l'analyse permet de caractériser un contexte d'usage du terminal, et plus particulièrement un contexte d'usage du geste G.

En outre, le terminal ET est éventuellement équipé d'une dalle tactile DT.

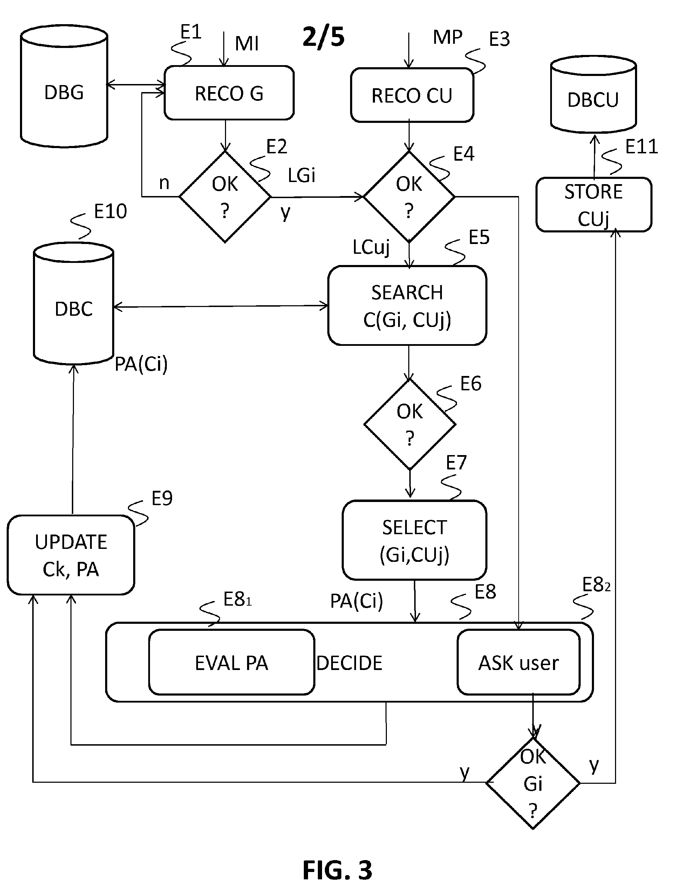

En relation avec la Figure **3,** on présente maintenant les étapes d'un procédé de reconnaissance de geste selon un premier mode de réalisation de l'invention.

On suppose que l'utilisateur de l'équipement terminal ET commence à exécuter un geste G à l'aide de son terminal. Ce geste G est détecté par les différents capteurs de navigation inertielle, qui collectent des valeurs de mesures physiques pendant un intervalle de temps comprenant la période d'exécution du geste G.

Au cours d'une étape E1, le geste G est détecté et reconnu, par analyse des valeurs de mesures physiques collectées par le module de navigation inertielle du terminal E et comparaison à des modèles de gestes prédéfinis, stockés dans une base de données de référence de gestes DBG. Cette étape s'appuie sur une approche géométrique de la classification d'un geste inconnu, réalisée sur les dix gestes les plus proches de la base de référence sur un critère de distance dans l'espace des caractéristiques inertielles. La distance DTW (« *Distance Time Warping* », en anglais), connue de l'homme de métier et décrite par exemple dans l'article de D. H. Wilson et al, intitulé « Gesture Récognition using the Xwand », dans le rapport technique de l'institut de robotique de l'Université Cornelly Melon CMU-RI-04-57, en avril 2004, permet de mesurer une similarité entre deux signaux temporels.

Dans ce mode de réalisation de l'invention, on considère que le geste G est reconnu lorsque la distance DTW mesurée entre les caractéristiques inertielles et celles d'au moins un modèle de référence de la base de données de gestes est inférieure à un seuil prédéterminé.

Deux cas sont possibles : si le geste G n'est pas reconnu, aucune action spécifique n'est réalisée et le procédé se met en attente d'un nouveau geste G' à analyser. On comprend que les capteurs collectent en permanence des données de mesures physiques et que l'étape de reconnaissance de geste est susceptible de se déclencher à tout instant, sur détection d'une activité suffisante, par exemple lorsqu'un niveau d'énergie détecté dépasse un seuil prédéterminé.

Dans un premier mode de réalisation de l'invention, on suppose que le geste G a été reconnu comme correspondant au modèle de geste G1 de la base de données DBG. Il est donc décidé en E2 de considérer dans quel contexte d'usage l'utilisateur a exécuté ce geste.

Au cours de l'étape E3, un contexte d'usage du terminal ET est analysé pendant un intervalle de temps comprenant la période d'exécution du geste G, à partir des valeurs de mesures physiques collectées par les capteurs. On comprend donc que cette étape est mise en oeuvre en parallèle de l'étape E1.

Les valeurs des mesures physiques du contexte analysé sont comparées à celles correspondant à des contextes d'usage de l'utilisateur précédemment rencontrés et stockés dans une base de données DBCU. La reconnaissance d'un contexte mémorisé est fait par similarité des mesures physiques analysées du contexte courant avec un contexte mémorisé.

On notera que les mesures physiques relatives au contexte d'usage courant n'ont pas nécessairement été collectées sur une période de temps de durée identique à celle des contextes d'usages de l'historique.

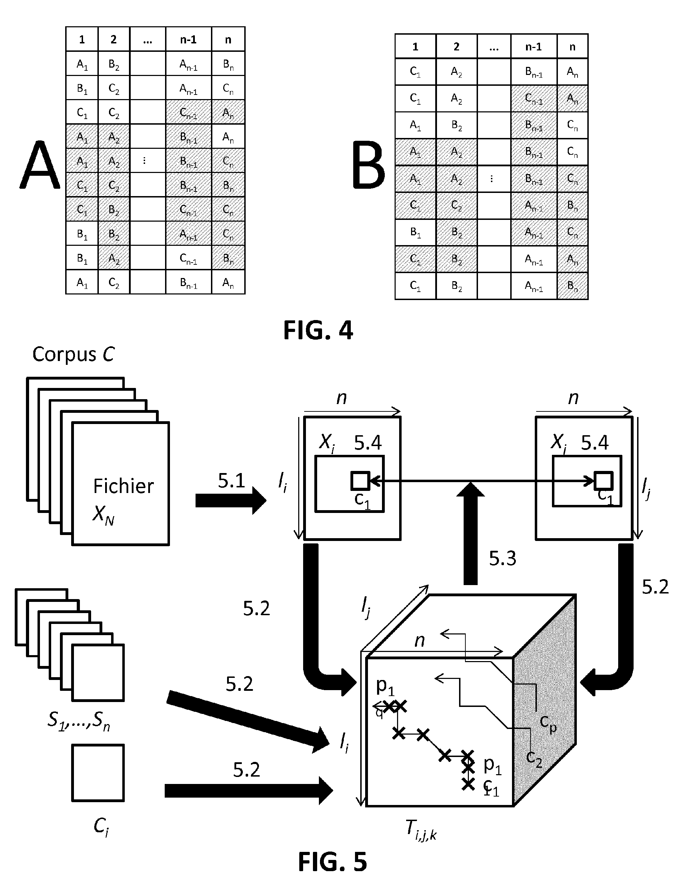

De façon avantageuse, une technique d'alignement de matrices peut être mise en oeuvre. Elle sera présentée plus en détails en relation avec la figure **5**.

Deux cas sont possibles : soit un contexte d'usage CU est reconnu en E4 pour le geste G courant et l'étape E5 est mise en oeuvre, soit aucun contexte d'usage mémorisé n'est reconnu et l'étape E8 de décision est déclenchée..

On suppose que le contexte d'usage courant CUj a été reconnu comme correspondant au contexte d'usage mémorisé CU2.

Au cours d'une étape E5, le procédé recherche dans une base de données DBC de couples gestes/contextes, un couple correspondant au couple courant (G1, CU2). Une telle base regroupe les couples geste/contexte d'usage qui ont déjà été reconnus au cours de l'historique d'usage de l'utilisateur. Elle associe à un couple geste/contexte d'usage une probabilité d'apparition PA de ce couple, calculée à partir du nombre d'occurrences de ce couple dans l'historique de l'utilisateur.

De façon avantageuse, une telle probabilité d'apparition PA est calculée selon l'équation suivante :

$$PA = \frac{nb_{GiCUj}}{nb_{tot}}\ (1),$$

avec i entier non nul indice du modèle de geste et j entier non nul indice du contexte d'usage rencontré.

Tableau 1

| Nb occurrences Contexte\Geste | G1 | G2 | G3 | G4 |
|---|---|---|---|---|
| CU1 | 2 | | | |
| CU2 | 3 | 4 | | |
| CU3 | | | | 5 |

Dans l'exemple du tableau 1, on considère le nombre d'occurrences du couple (G1, CU2) est de 3 et le nombre total d'occurrences $nb_{tot}$ de gestes s'élève à 14.

La probabilité d'apparition de ce couple est calculée à partir de l'équation (1) et on obtient PA = 3/14.

En E6, deux cas sont possibles :

- Le couple (G1, CU2) est présent dans la base de données DBC avec une probabilité d'apparition PA associée ;
- Il n'est pas présent, car il n'a encore jamais été rencontré dans l'historique de l'utilisateur.

On suppose que le couple (G1, CU2) a la plus forte probabilité dans la base de données DBC.

Au cours d'une étape E8, le procédé prend une décision de validation ou invalidation du couple (G1, CU2) trouvé. Dans ce mode de réalisation, la validation est automatique si la probabilité PA(G1,CU2) est supérieure à un seuil de confiance de confiance SPA2, sinon l'utilisateur est interrogé en $E8_2$. Avantageusement ce seuil est choisi suffisamment élevé pour qu'au plus un couple puisse le passer.

On considère maintenant le cas où l'utilisateur est interrogé, au cours de la sous-étape $E8_2$. En cas de validation du geste G1 par l'utilisateur, le nombre d'occurrences du couple (G1,CU2) considéré est incrémenté, par exemple d'une unité. La probabilité d'apparition est recalculée comme suit :

$$PA'(G1, CU2) = \frac{nb'}{nb'_{tot}} = \frac{nb_{G1,CU2} + 1}{nb_{tot}+1}\ (2)$$

En cas d'invalidation, la probabilité d'apparition est recalculée comme suit :

$$PA'(G1, CU2) = \frac{nb'}{nb'_{tot}} = \frac{nb_{G1,CU2}}{nb_{tot}+1}(3)$$

On considère maintenant le cas où l'étape E1 a reconnu plusieurs gestes Gi candidats, avec i entier.

En E2, l'étape E3 est déclenchée et on considère qu'elle reconnait respectivement plusieurs contextes d'usages CUj, avec j entier.

L'étape E1 a fourni une liste LGi des gestes Gi les plus probables, ordonnée selon un ordre décroissant des scores de reconnaissance obtenus, les gestes étant considérés comme reconnus si leur score de reconnaissance est supérieur à un premier seuil SR1 de reconnaissance (par exemple 80%), en fonction de la base de gestes de référence DBG disponibles.

L'étape E3 a fourni une liste LCuj de contextes les plus probables en fonction des valeurs du contexte courant et de l'historique des contextes d'usages de l'utilisateur. Cette liste LCUj, résultat de l'étape E2, est prise en compte en E4 dès lors qu'au moins un geste Gi a été reconnu.

L'étape E5 est déclenchée, en E4, dès lors que la liste LCuj de contextes d'usage obtenue comprend au moins un contexte d'usage reconnu. Cette étape E5 réalise une fusion des informations contextuelles et gestuelles, en :

- recherchant les couples geste/contexte issus de la liste de gestes et de la liste de contextes qui sont stockés dans la base de couples DBC ; et
- extrayant une liste LCk de k couples, avec k entier, ordonnée dans l'ordre décroissant sur la base de la probabilité d'apparition PA associée à chaque couple Ck.

Au cours d'une étape de sélection E7, lorsque plusieurs couples enregistrés ont été trouvés pour un même geste, seuls les couples auquel est associée une probabilité d'apparition PAk supérieure à un premier seuil de confiance SPA1 sont conservés. Par exemple, ce seuil est choisi de l'ordre de 40%. Un avantage de cette valeur est qu'elle élimine les fausses alarmes et évite l'examen ultérieur de couples de prime abord non pertinents.

A l'issue de cette sélection, les couples correspondant aux gestes sélectionnés sont présentés à l'étape de décision E8.

Une sous-étape E8, d'évaluation des probabilités d'apparition PAk associés aux couples Ck qui on passé l'étape de sélection E7, est mise en oeuvre. Elle comprend au moins la comparaison de la valeur de PAk au deuxième seuil SPA2 de confiance prédéterminé, de l'ordre de 80 % par exemple. Cette valeur est suffisamment élevée pour que le système accorde sa confiance à un couple.

Si un couple candidat Ck a une probabilité d'apparition PAk supérieure à ce seuil, il est automatiquement validé.

Sinon, si un ou plusieurs couples ont obtenu un score PA inférieur à ce seuil, deux cas sont possibles :

- les couples sélectionnés concernent tous le même geste, par un cercle effectué dans des contextes d'usage différents. Le système considère qu'il ne peut pas accorder une confiance suffisante aux couples candidats. Il n'y a donc une ambiguïté et il demande confirmation à l'utilisateur en E8$_2$. Si l'utilisateur valide le geste, le couple Ck le plus probable sera confirmé. Si l'utilisateur ne le valide pas, tous les couples Ck concernés verront leur probabilité d'apparition PAk diminuée par exemple selon le calcul de l'équation (3); ou
- les couples sélectionnés concernent des gestes différents. Etant donné qu'aucun des couples n'a passé le seuil de confiance SPA2, il subsiste une ambiguïté sur le geste reconnu. Il convient de la lever en demandant une confirmation à l'utilisateur au cours d'une sous-étape E8$_2$. Une fois qu'un geste a été validé par l'utilisateur, s'il subsiste encore plusieurs couples en lice, l'ultime couple Ck choisi est celui qui est associé à la plus grande valeur de probabilité d'apparition PA$_k$.

Dans tous les cas, qu'un couple Ck de la liste LCk soit validé ou non, sa probabilité d'apparition PA$_k$ est recalculée en E9 en fonction de l'occurrence courante et de la décision prise.

Avantageusement, la probabilité d'apparition PA$_k$ d'un couple Ck est pondérée par la décision de l'utilisateur. On considère par exemple le cas du couple (G1,CU2) qui bénéficie de la probabilité d'apparition PA la plus élevée, mais dont le geste G1 a été invalidé par l'utilisateur. La probabilité d'apparition PA du couple (G1,CU2) est dévaluée, par exemple selon l'équation (3).

Au contraire, si l'utilisateur valide la proposition de décision (G1, CU2) du système, alors le nombre d'occurrences du couple (G1,,CU2) considéré, est incrémenté, par exemple d'une unité. La probabilité d'apparition est recalculée par exemple selon l'équation (2).

Ainsi, une décision de validation contribuera à renforcer la probabilité d'apparition de ce couple et une décision d'invalidation aura pour effet de diminuer sa probabilité d'apparition, plusieurs décisions négatives de l'utilisateur à la suite entraînant l'oubli progressif du couple (G1,CU2).

La nouvelle valeur de PA est ensuite mise à jour dans la base de données DBC, au cours d'une étape E10.

On suppose maintenant que le contexte courant CUcur n'a pas été reconnu à partir de la base de données DBCU de contextes d'usage. Dans ce cas, comme précédemment évoqué, le procédé décide en E4 de basculer à l'étape E8 de décision. En E8$_2$, il soumet le geste Gi reconnu à la validation de l'utilisateur. Si l'utilisateur confirme que c'est le geste Gi qu'il a exécuté, le nouveau contexte CUcur est stocké comme nouveau contexte dans la base DBCU au cours d'une étape E11. On affecte à ce nouveau contexte d'usage un index j', non encore utilisé, par exemple j'=12, qui sert à identifier le nouveau contexte récurrent rencontré.

Selon l'invention, c'est la reconnaissance du geste qui prime, on considère donc que le geste Gi a été reconnu dans le nouveau contexte d'usage CUj'. Une probabilité d'apparition du nouveau couple Ck' est calculée au cours de l'étape E9.

Selon un choix d'implémentation, cette probabilité d'apparition PAk' est calculée comme la probabilité conditionnelle que le geste G ait lieu dans le contexte d'usage CU, qui s'exprime de la façon suivante selon la formule de Bayes :

$$PA(G \cap CU) = P(G/CU)P(CU) \ (4)$$

Le nouveau couple Ck'(Gi, CUj') est ensuite stocké dans la base de données DBC avec sa probabilité d'apparition PAk' calculée, au cours de l'étape E10.

Au contraire, si l'utilisateur ne confirme pas le geste G reconnu, alors le nouveau contexte d'usage CUj' est rejeté et n'est pas stocké en mémoire.

En relation avec les Figures 4 à 7, on présente maintenant un exemple de mise en oeuvre de l'étape E3 de reconnaissance de contexte d'usage, selon un mode de réalisation de l'invention.

Dans ce mode de réalisation de l'invention, l'étape de reconnaissance d'un contexte d'usage de l'utilisateur exécute un algorithme d'alignement de matrices de caractères selon les principes suivants :

On appelle distance de Levenshtein (ou distance d'édition) entre deux séquences de caractères, M1 de longueur L1 et M2 de longueur L2, le coût minimal pour reconstituer la séquence M2 à partir des caractères de la séquence M1 en effectuant les opérations élémentaires suivantes:

- substitution d'un caractère de M1 en un caractère de M2.
- ajout dans M1 d'un caractère de M2.
- suppression d'un caractère de M1.

On associe ainsi à chacune de ces opérations un coût ou distance d'édition. Le coût est généralement égal à 1. Les coûts d'alignement des chaînes de caractères M1 et M2 sont définis par $T_{ij}$ à partir des coûts d'édition de ces opérations, selon le pseudo code:

```
entier Distance (caractere M1[1..L1], caractere M2[1..L2])
   pour i de 0 à L1
      T[i, 0] := i
   pour j de 0 à L2
      T[0, j] := j

   D = I = S = 1
   pour i de 1 à L1
      pour j de 1 à L2
            T[i, j] := minimum(
                    T[i-1, j  ] + D,    // suppression
                    T[i,   j-1] + I,    // insertion
                    T[i-1, j-1] + S     // substitution
                  )
   retourner T[L1, L2]
```

Ainsi la valeur T[L1, L2] donne la distance entre les chaines de caractères M1 et M2.

On notera qu'il n'est pas nécessaire d'aligner totalement deux séquences de caractères, mais seulement d'aligner au moins partiellement deux matrices de caractères entre deux fichiers, représentant deux périodes de l'historique d'un utilisateur donné. Le coût d'alignement ainsi calculé correspond à une mesure de similarité telle que plus la mesure est grande et plus les matrices sont considérées comme similaires, et inversement plus la mesure est faible et plus les matrices sont dissimilaires.

Les séquences de caractères ont une seule dimension, la longueur, alors que les matrices ont deux dimensions, qui sont le nombre de lignes et le nombre de colonnes. Cet alignement de matrices de caractères permet de définir des situations où les contextes se ressemblent et de marquer ces contextes avec une étiquette (ex : a, b).

En relation avec la Figure **5** (i.e. étape 5.1), les données contextuelles enregistrées pour un utilisateur sont stockées dans un corpus *Corp,* qui est composé de plusieurs fichiers $X_i$, *i* variant entre 1 et le nombre de fichiers *N. N* est un entier non nul, fonction du volume de données acquises et de la longueur *l* de chacun des fichiers. La valeur de *l* a un impact sur la consommation de mémoire et doit donc être choisie en fonction de la quantité de mémoire disponible.

En relation avec la Figure **4,** chacun des *N* fichiers a un format matriciel, selon *n* colonnes et *l* lignes. Chaque colonne correspond à une variable du contexte (ex : bruit, lumière, localisation, mouvement, etc.). Les valeurs des fichiers ne sont plus les valeurs brutes des mesures collectées par les capteurs physiques ; elles ont été discrétisées. Une approche de discrétisation possible est le regroupement des valeurs du contexte mesurées par des capteurs physiques. Dans le cas de certains capteurs, les valeurs sont déjà disponibles dans un état discrétisé, c'est-à-dire que les données contextuelles sur l'usage de l'utilisateur sont d'abord étiquetées selon une échelle établie par capteur (ex : pour le capteur de lumière, nous définissons 3 niveaux : $A_1$, $A_2$, $A_3$) et ces labels de capteurs sont ordonnés en ligne pour chaque unité de temps (la période d'acquisition est ici par exemple de 30 secondes),.

Pour chaque colonne (et donc capteur) et pour chaque couple de valeurs discrètes, une valeur de similarité doit être définie. Ces valeurs dépendent du type de capteur utilisé pour générer les données contextuelles. Un capteur de position par exemple offre la distance géographique physique entre les lieux étudiés ; l'inverse de la distance peut définir la similarité entre ces lieux. Ainsi, plus la valeur de similarité est négative et plus les lieux sont dits dissimilaires. La similarité d'un lieu avec lui-même est définie avec une valeur positive. Ce type d'approche s'applique à tout capteur possédant une mesure de distance (ex : luxmètre, sonomètre, etc.). Pour d'autres capteurs, il est possible d'utiliser la probabilité de transition entre deux états comme valeur de similarité (i.e. si un capteur capture souvent une valeur *x* après une valeur *y*, la probabilité de *y* sachant x peut servir de valeur de similarité). Par conséquent, les valeurs de similarité sont regroupées dans des tableaux $S_i$ (*i* entre 1 et *n*) et servent de coût de substitution entre deux valeurs d'un même capteur.

On considère, à titre illustratif, l'exemple simplifié suivant :

Le terminal de l'utilisateur est équipé de deux capteurs, soit un capteur A apte à collecter 3 valeurs de mesures discrètes A1, A2, A3 et un capteur B apte à collecter deux valeurs discrètes B1, B2.

Les valeurs de similarité associées aux couples de mesures possibles pour chacun des deux capteurs sont définies dans les tableaux suivants :

Tableau 2

| $S_1$ | A1 | A2 | A3 |
|-------|-----|-----|-----|
| A1 | 3 | -8 | -5 |
| A2 | -8 | 3 | -8 |
| A3 | -5 | -8 | 4 |

Tableau 3

| $S_2$ | B1 | B2 |
|-------|-----|-----|
| B1 | 2 | -10 |
| B2 | -10 | 5 |

On utilise également un tableau $CT_i$ qui définit des coûts d'insertion et de suppression pour chaque état de chaque capteur; ils représentent la tendance d'un capteur d'être plus ou moins synchronisé avec les autres et ils définissent une mesure de l'impact d'une différence de longueur entre deux intervalles autrement similaires.

Dans le cas de l'exemple précédent, on définit un coût d'insertion Insi et un coût de suppression Deli d'une mesure à partir de la valeur de similarité ainsi définie, de la façon suivante :

$$Insi\,(x,y) = Si(x,y) + constante,\ pour\ x<>y\ (x\ différent\ de\ y)$$

$$Deli\,(x,y) = Si(x,y)\ +\ constante\ pour\ x<>y$$

$$Insi(x,x) = Deli(x,x) = 0$$

Par exemple, la constante est choisie égale à -4.

On obtient donc le tableau $CT_1$ de coûts d'édition suivant pour les opérations Ins1 et Del1 sur les mesures du capteur A :

Tableau 4

| $CT_1$ | A1 | A2 | A3 |
|---|---|---|---|
| A1 | 0 | -12 | -9 |
| A2 | -12 | 0 | -12 |
| A3 | -9 | -12 | 0 |

Dans l'exemple simplifié précédent, on cherche à aligner deux fichiers F1, F2 colonne par colonne :

Tableau 5 : F1

| 1 | A1 | B1 |
|---|---|---|
| 2 | A2 | B2 |
| 3 | A2 | B1 |
| 4 | A2 | B1 |
| 5 | A2 | B2 |
| 6 | A3 | B1 |

Tableau 6 : F2

| 1 | A3 | B2 |
|---|---|---|
| 2 | A2 | B2 |
| 3 | A2 | B1 |
| 4 | A2 | B1 |
| 5 | A1 | B2 |

Pour trouver les alignements de la 1ère colonne entre F1 et F2, on calcule le tableau T suivant des coûts de similarité de chaînes pour le capteur A. Nous ferons de même pour les autres capteurs pour obtenir $T_{ijk}$ (cf. Figure **5**)

Tableau 7

| T | A3 | A2 | A2 | A2 | A1 |
|---|---|---|---|---|---|
| A1 | 0 | 0 | 0 | 0 | 3 |
| A2 | 0 | 9 | 6 | 3 | 0 |
| A2 | 0 | 9 | 6 | 3 | 0 |
| A2 | 0 | 6 | 6 | 3 | 0 |
| A2 | 0 | 3 | 3 | 3 | 0 |
| A3 | 4 | 0 | 0 | 0 | 0 |

Par exemple, le score T(1,1) = 9 correspond au coût cumulé d'alignement des sous-chaines A2A2A2A1 et A2A2A2A3. Ces sous-chaines partagent trois valeurs (A2) de similarité S1(A2,A2)= 3 (cf. Tableau 2)

De même, T(0,5)=4, car le coût de similarité entre la sous-chaine A3 et A3A2A2A2A1 est S1(A3,A3)=4

Dans le cas général où n est strictement supérieur à 2, pour trouver les alignements locaux de matrices de caractères entre deux fichiers $X_i$ et $X_j$, un tableau de coûts tridimensionnels $T_{i,j,k} \in \mathbb{R}^{l_i \times l_j \times n}$ est calculé (cf. Figure 5, étape 5.2). Ce tableau est généré itérativement depuis la cellule du tableau (0,0,0), d'abord selon la dimension des colonnes, et puis dans les dimensions des lignes. Chaque valeur de $T_{i,j,k}$ est basée sur la valeur maximum des cases dans cinq directions :

- (0,0,-1)

- (-1,0,0)

- (0,-1,0)

- (-1,-1,0)

- (-1,-1,-1)

Les directions 1, 4 et 5 correspondent à des substitutions $S_k(X_i(i,k),X_j(j,k))$ (avec les différents prédécesseurs en $T_{i,jk}$) et les directions 2 et 3 correspondent à une suppression $C_k(X_i(i,k), X_j(j,k))$ en $X_i$ et une insertion $C_k(X_i(i,k), X_j(j,k))$ en $X_j$ respectivement.

Le tableau de coûts pour l'alignement des matrices de caractères $X_i$ et $X_j$ est défini par le pseudo code suivant :

```
entier Calcul_Tijk (caractere Xi[1..n]x[1..L1], caractere Xj[1..n] [1..L2])
 T[0,0,0]:=0
 pour i de 1 à L1
 pour j de 1 à L2
  pour k de 1 à n
   T[i, j, k] := maximum(0,
      T[i-1,j,k] + Ck(Xi(i,k),Xj(j,k)), //suppression
      T[i,j-1,k] + Ck(Xi(i,k),Xj(j,k)), //insertion
      T[i,j,k-1] + Sk(Xi(i,k),Xj(j,k)), //substitution
      T[i-1,j-1,k] + Sk(Xi(i,k),Xj(j,k)), //substitution
      T[i-1,j-1,k-1] + Sk(Xi(i,k),Xj(j,k)), //substitution
        )
```

On comprend qu'à la position (i, j, k), le coût d'alignement correspond à la valeur maximale entre les valeurs suivantes :

- 0,

- La somme du coût T obtenu à la position (i-1,j,k) et du coût de suppression associé entre Xi(i,k) (élément du fichier Xi à la ligne i pour le capteur k) et Xj(j,k) (élément du fichier Xj à la ligne j pour le capteur k),

- La somme du coût T obtenu à la position (i,j-1,k) et du coût d'insertion associé entre Xi(i,k) et Xj(j,k),

- La somme du coût T obtenu à la position (i,j,k-1) et du coût de substitution associé entre Xi(i,k) et Xj(j,k),

- La somme du coût T obtenu à la position (i-1,j-1,k) et du coût de substitution associé entre Xi(i,k) et Xj(j,k), et

- La somme du coût T obtenu à la position (i-1,j-1,k-1) et du coût de substitution associé entre Xi(i,k) et Xj(j,k).

L'étape suivante 5.3 consiste à trouver des candidats pour les alignements. Ces candidats sont ceux qui ont un fort coût d'alignement cumulé dans $T_{i,j,k}$. Plus précisément, des positions en $T_{i,j,k}$ sont désignées comme candidates

$\{z_1, .., z_p\}$ pour un algorithme de trace-arrière, si leurs valeurs sont :

a) Plus grandes que les 26 valeurs adjacentes dans l'espace 3D des indices de $T_{i,j,k}$ et
b) supérieures à un seuil THLD qui se base sur la taille minimale désiré d'un alignement.

A partir de ces positions candidates, la trace-arrière suit un chemin dans $T_{i,j,k}$ selon les 5 directions décrites précédemment, jusqu'à une valeur nulle (ou une limite du tableau de coûts), qui met en évidence la fin de l'alignement. Chaque position parcourue de cette manière fait partie de l'alignement entre $X_i$ et $X_j$: les pivots $\{p_{11}, ..., p_{1q}\}$ (par ex : le pivot $p_{12}=T_{i=5,j=2,k-3}$ met en correspondance le capteur 3 pour la ligne 5 de $X_i$ et pour la ligne 2 de $X_j$, c'est-à-dire ces deux informations contextuelles sont alignées.) Les candidats d'origine font partie de l'ensemble des pivots.

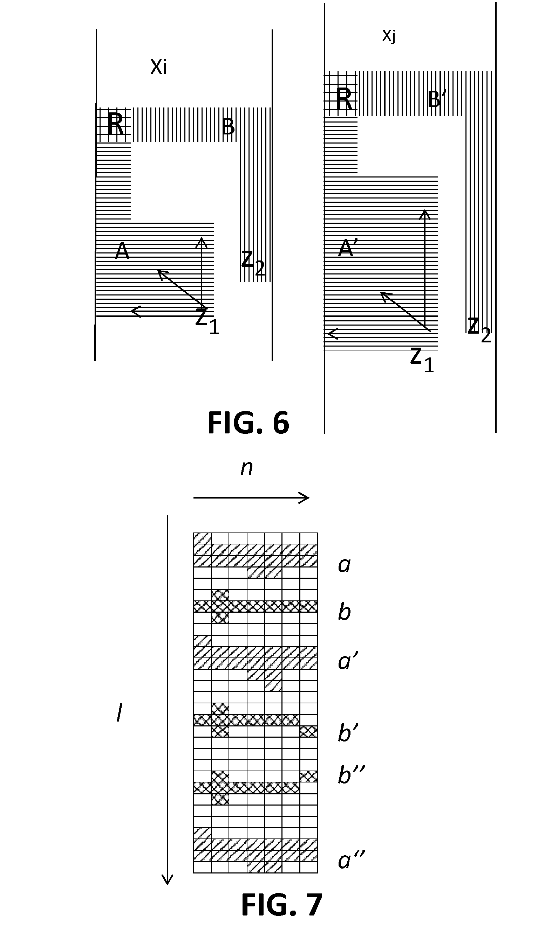

L'ensemble des pivots forme un alignement effectué en 5.4. En relation avec la Figure **6,** deux, alignements : A avec A' et B avec B' sont formés. A et B sont fusionnés, car ils sont considérés comme représentant le même motif de contexte d'usage, sur la base d'un critère géométrique, qui est le partage d'une même racine R.

Les regroupements obtenus sont ensuite labellisés.

Afin de regrouper les différents motifs de contexte du corpus global Corp, une approche de regroupement algorithmique (en anglais, *clustering*) est nécessaire (par exemple sur la Figure **7,** les parties a, a' et a" sont des motifs similaires décrivant le même contexte). Les algorithmes de regroupement sont classiquement basés sur une mesure de similarité. Dans l'exemple d'implémentation considéré, cette mesure est la mesure de similarité entre deux matrices de caractères, comme précédemment exposée. Pour chaque regroupement un représentant est créé, en sélectionnant l'élément avec la valeur maximale de similarité vers tous les autres éléments du regroupement (i.e. le centroïde). Cet élément est utilisé pour déterminer la mesure de similarité des contextes détectés en temps réel avec les contextes connus ; si cette mesure est supérieure à un seuil, le contexte courant est reconnu comme le contexte habituel représenté par le regroupement d'alignements dont le représentant est issu.

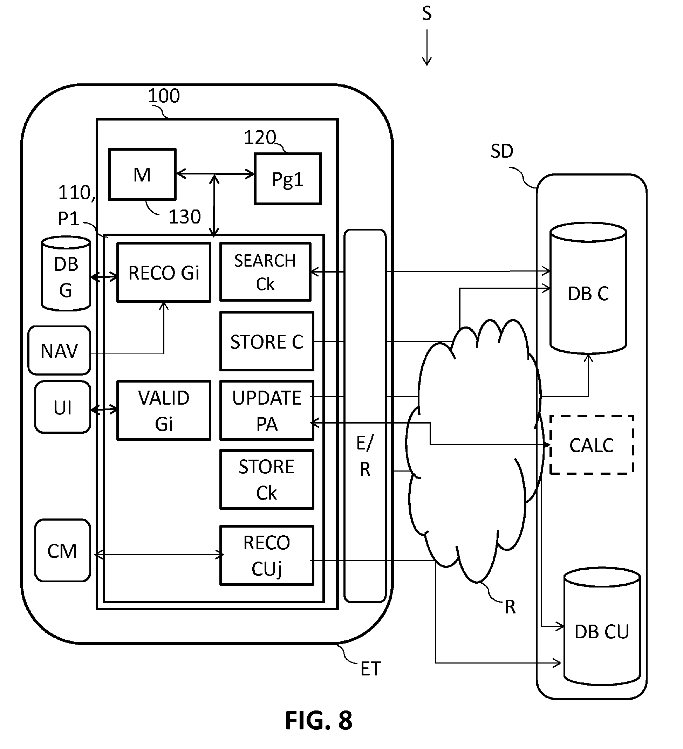

En relation avec la Figure **8,** on considère maintenant la structure simplifiée d'un dispositif 100 de reconnaissance d'un geste instrumenté selon un exemple de réalisation de l'invention. Le dispositif 100 met en oeuvre le procédé de reconnaissance selon l'invention tel que décrit ci-dessus.

On notera que l'invention qui vient d'être décrite, peut être mise en oeuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en oeuvre la ou les fonctions décrites pour le module ou l'entité concerné(e).

Dans cet exemple, le dispositif 100 est intégré à un équipement terminal ET d'un utilisateur. Selon une variante, le dispositif 100 pourrait être indépendant et connecté au terminal ET.

Par exemple, le dispositif 100 comprend une unité de traitement 110, équipée par exemple d'un processeur P1, et pilotée par un programme d'ordinateur $Pg_1$ 120, stocké dans une mémoire 130 et mettant en oeuvre le procédé de reconnaissance selon l'invention.

A l'initialisation, les instructions de code du programme d'ordinateur $Pg_1$ 120 sont par exemple chargées dans une mémoire RAM avant d'être exécutées par le processeur de l'unité de traitement 110. Le processeur de l'unité de traitement 110 met en oeuvre les étapes du procédé de reconnaissance décrit précédemment, selon les instructions du programme d'ordinateur 120. Dans l'exemple de réalisation de l'invention considéré, le dispositif 100 comprend au moins une unité RECO Gi de reconnaissance du geste Gi exécuté par l'utilisateur, une unité RECO CUj du contexte d'usage courant dans lequel l'utilisateur a exécuté son geste Gcur, une unité SEARCH de recherche d'une liste de couples Ck(Gi, CUj) formés de gestes et de contextes d'usage courant reconnus, une unité SEL de sélection de couples de la liste Lk obtenue, une unité VALID de décision de validation ou d'invalidation des couples Ck sélectionnée, une unité UPDATE de mise à jour d'une probabilité d'apparition PA associée au couple Ck en fonction de la décision prise, une unité STORE CU d'enregistrement des nouveaux contextes courants analysés, lorsqu'aucun contexte d'usage stocké dans une base de données DBCU n'a été reconnu et une unité STORE C d'enregistrement du couple formé du geste reconnu et du nouveau contexte d'usage, lorsqu'aucun couple stocké dans une base de données de couples DBC n'a été reconnu. Ces unités sont pilotées par le processeur P1 de l'unité de traitement 110.

Le dispositif 100 de reconnaissance de geste est donc agencé pour coopérer avec le terminal ET, en particulier les modules suivants de ce terminal : un module NAV de navigation inertielle apte à mesurer un vecteur de caractéristiques inertielles à un instant $t_n$ et à le mettre à disposition de l'unité RECO G de reconnaissance de geste, un module UI d'interaction avec l'utilisateur apte à être sollicité par l'unité VALID pour demander une confirmation à l'utilisateur, un module CM de collecte de mesures physiques par une pluralité de capteurs disposés sur le terminal ET et une base de données comprenant des enregistrements de modèles de gestes destinés à être utilisés par l'unité de reconnaissance de geste.

Selon un choix d'implémentation, la base de données contextuelles DBCU et la base de couples DBC sont stockées sur un serveur distant SD, par exemple dédié au stockage des informations contextuelles et au calcul des probabilités d'apparition associées aux couples Ck(Gi, CUj) rencontrés. Un tel serveur distant est connecté à un réseau IP, par exemple internet . Le terminal ET de l'utilisateur est apte à collecter les mesures physiques des capteurs et à les transmettre au dispositif 100 pour qu'il les analyse. Le terminal ET est aussi apte à transmettre les données relatives aux contextes d'usage analysés et aux couples geste/contexte d'usage identifiés au serveur distant SD par l'intermédiaire du réseau R pour qu'il les stocke dans la base de données correspondante. Le terminal ET est enfin apte à interroger les bases de données DBCU et DBC afin d'obtenir les informations requises par le dispositif 100. Ainsi, les besoins de l'équipement ET en termes de puissance de calcul, de mémoire de stockage et d'énergie restent limités.

On considère aussi un système de reconnaissance de geste S selon l'invention. Selon cet exemple d'implémentation, il comprend le terminal ET, le dispositif 100 et le serveur SD hébergeant les bases de données de contexte d'usage et de couples.

L'invention qui vient d'être présentée peut trouver de nombreuses applications. Notamment, elle peut être utilisée pour reconnaître de façon plus efficace et plus robuste un geste instrumenté associé à une action particulière, par exemple le lancement d'une application sur le terminal de l'utilisateur, l'accès à un menu, la validation d'une option etc.

A titre d'exemple, on considère les cas d'usages suivants :

- Un utilisateur est dans le métro. Il souhaite appeler un contact en réalisant un geste circulaire. Les secousses du métro entravent la bonne reconnaissance du geste, mais la reconnaissance du contexte d'usage à l'aide de capteurs sonores et du module de navigation inertielle (bruyant+ forte secousse) permet d'identifier un contexte d'usage rencontré dans le passé.

- Un utilisateur souhaite faire une photo de sa fille à vélo dans un parc. Il réalise un geste sous la forme d'un carré pour lancer l'application « Caméra ». Sa prise de décision doit être rapide pour ne pas manquer cet instant mémorable, il réalise donc son geste avec moins de précision. La reconnaissance de geste en est affectée. La reconnaissance du contexte d'usage, à partir d'un capteur de lumière, d'un microphone et d'un module GPS par exemple, reconnaît le contexte dans l'historique de l'utilisateur. En effet, par le passé, l'utilisateur a déjà formé un carré dans cette situation d'usage. Avec l'invention, le système est capable de valider ce geste comme un carré, bien qu'il ait été exécuté avec moins de précision que d'habitude, grâce à la prise en compte du contexte d'usage de l'utilisateur, et de déclencher l'activation de l'appareil photo.

## Revendications

1. Procédé de reconnaissance d'un geste instrumenté, exécuté par un utilisateur à l'aide de son terminal mobile (ET), ledit terminal comprenant un module de mesures (CM) comprenant une pluralité de capteurs (CA1, ...CAN) de mesures physiques parmi lesquels des capteurs de navigation inertielle, ledit procédé étant **caractérisé en ce qu'**il comprend les étapes suivantes,

   - reconnaissance (E1) d'au moins un geste utile détecté par analyse de mesures physiques collectées par lesdits capteurs et par comparaison des mesures analysées à des caractéristiques de modèles de gestes d'une base de gestes,
   - reconnaissance (E3) d'au moins un contexte d'usage, dit contexte courant, par analyse de mesures physiques collectées par lesdits capteurs et par similarité des mesures physiques analysées avec celles de contextes d'usage précédemment enregistrés dans une base de contextes,
   - en cas de reconnaissance d'au moins un geste utile et d'au moins un contexte d'usage précédemment enregistré, recherche (E5) d'au moins un enregistrement correspondant à un couple formé d'un desdits au moins un geste utile et d'un desdits au moins contexte d'usage reconnus, ledit couple comprenant une probabilité d'apparition (PA), ladite probabilité ayant été calculée en fonction d'un nombre d'occurrences de reconnaissance dudit couple sur une période de temps passée;
   - dans le cas où au moins un enregistrement a été trouvé, décision (E8) de validation d'un desdits au moins un couples enregistrés au moins en fonction de la valeur de la probabilité d'apparition obtenue ;
   - en cas de reconnaissance d'au moins un geste utile et de non reconnaissance d'au moins un contexte d'usage courant, demande (E8$_2$) de validation du geste reconnu à l'utilisateur ;
   - en cas de validation par l'utilisateur, enregistrement (E11) des valeurs de mesures physiques analysées en tant que nouveau contexte d'usage dans la base de contextes et enregistrement (E10) du nouveau couple formé du geste reconnu et du nouveau contexte d'usage, avec une probabilité d'apparition associée calculée à partir de l'occurrence courante.

2. Procédé de reconnaissance d'un geste selon la revendication 1, **caractérisé en ce que**, lorsque plusieurs couples enregistrés ont été trouvés pour un même geste, le procédé comprend une étape (E7) de sélection des couples dont la probabilité d'apparition associée est supérieure à un premier seuil de confiance (SPA1) prédéterminé.

**3.** Procédé de reconnaissance d'un geste selon les revendications 1 ou 2, **caractérisé en ce que** lorsque plusieurs couples enregistrés ont été trouvés, l'étape de décision (E8) comprend en outre une sous-étape (E8$_1$) d'évaluation desdits couples par comparaison à un deuxième seuil de confiance (SPA2) prédéterminé.

**4.** Procédé de reconnaissance d'un geste selon la revendication 3, **caractérisé en ce que** lorsque la probabilité d'apparition obtenue pour ledit au moins un couple est inférieure au deuxième seuil prédéterminé, l'étape de décision comprend en outre une demande (E8$_2$) de confirmation de validation du geste dudit au moins un couple à l'utilisateur.

**5.** Procédé de reconnaissance d'un geste selon l'une des revendications **1** à **4, caractérisé en ce que** ledit procédé comprend une étape (E9) de mise à jour de la probabilité d'apparition associée audit au moins un couple trouvé, en fonction de la décision prise pour l'occurrence courante.

**6.** Procédé de reconnaissance d'un geste selon l'une des revendications **1** à **5, caractérisé en ce que** l'étape (E3) de reconnaissance d'un contexte d'usage comprend les sous-étapes suivantes :

- Discrétisation des mesures physiques acquises par la pluralité de capteurs, un nombre prédéfini de valeurs discrètes possibles étant associé à un capteur ;
- stockage (5.1) des valeurs discrètes obtenues dans une matrice de contexte d'usage courant, comprenant un nombre de colonnes égal au nombre de capteurs et un nombre de lignes égal au nombre de mesures effectuées par un capteur pendant la période de temps prédéterminée ;
- alignement des valeurs de mesures de la matrice du contexte d'usage courant avec des mesures d'une matrice de référence stockée en mémoire par application d'opérations d'édition aux mesures de ladite matrice courante, une opération d'édition ayant un coût d'édition associé ;
- calcul (5.2) d'un tableau de coûts d'alignement, le coût d'alignement d'une mesure j d'un capteur i étant au moins fonction d'une mesure de similarité entre la mesure j et une autre mesure du capteur i et du coût d'édition associé à l'opération d'édition appliquée à ladite mesure j ;
- sélection (5.3, 5.4) du contexte d'usage de référence dont la matrice de référence a obtenu les coûts d'alignement les plus élevés.

**7.** Procédé de reconnaissance d'un geste selon la revendication **6, caractérisé en ce que** les opérations d'édition appartiennent au groupe comprenant au moins :

- une insertion d'une mesure entre deux mesures successives du capteur i ;
- une suppression de la mesure j ;
- un remplacement de la mesure j par une autre mesure.

**8.** Procédé de reconnaissance d'un geste selon l'une des revendications **6** ou **7, caractérisé en ce que** l'étape de reconnaissance d'un contexte d'usage comprend en outre les sous-étapes suivantes :

- sélection (5.3) d'alignements locaux candidats par capteur dans le tableau de coûts d'alignements, les candidats sélectionnés ayant un coût d'alignement supérieur à un seuil prédéterminé ;
- regroupement (5.4) des alignements locaux candidats pour la pluralité de capteurs pour former un motif de contexte d'usage ;
- regroupement (5.4) des motifs de contexte d'usage formés à partir de mesures de similarité entre matrices de caractères, pour former des contextes ; et
- labellisation automatique des contextes formés.

**9.** Dispositif (100) de reconnaissance d'un geste instrumenté, exécuté par un utilisateur à l'aide de son terminal mobile (ET), ledit terminal comprenant un module (CM) de mesures comprenant une pluralité de capteurs de mesures physiques parmi lesquels des capteurs de navigation inertielle, ledit dispositif étant **caractérisé en ce qu'**il comprend les unités suivantes :

- reconnaissance (RECO G) d'au moins un geste utile détecté par analyse de mesures physiques collectées par lesdits capteurs et par comparaison des mesures analysées à des caractéristiques de modèles de gestes d'une base de gestes,
- reconnaissance (RECO CU) d'au moins un contexte d'usage, dit contexte courant, par analyse de mesures physiques collectées par lesdits capteurs et par similarité des mesures physiques analysées avec celles de contextes d'usage précédemment enregistrés dans une base de contextes,

- en cas de reconnaissance d'au moins un geste utile et d'au moins un contexte d'usage précédemment enregistré, recherche (SEARCH) d'au moins un enregistrement correspondant à un couple formé d'un desdits au moins un geste utile et d'un desdits au moins contexte d'usage reconnus, ledit couple comprenant une probabilité d'apparition (PA), ladite probabilité ayant été calculée en fonction d'un nombre d'occurrences de reconnaissance dudit couple sur une période de temps passée;

- dans le cas où au moins un enregistrement a été trouvé, décision (VALID) de validation d'un desdits au moins un couples enregistrés au moins en fonction de la valeur de la probabilité d'apparition obtenue ;

- en cas de reconnaissance d'au moins un geste utile et de non reconnaissance d'au moins un contexte d'usage courant, demande (E8$_2$) de validation du geste reconnu à l'utilisateur ;

- en cas de validation par l'utilisateur, enregistrement (STORE CU) des valeurs de mesures physiques analysées en tant que nouveau contexte d'usage dans la base de contextes et enregistrement (STORE C) du nouveau couple formé du geste reconnu et du nouveau contexte d'usage, avec une probabilité d'apparition associée calculée à partir de l'occurrence courante.

10. Terminal d'utilisateur (ET) comprenant une pluralité de capteurs (CA1, ..., CAN) de mesures physiques parmi lesquels des capteurs de navigation inertielle, ledit terminal étant **caractérisé en ce qu'**il comprend un dispositif de reconnaissance d'un geste selon la revendication **9.**

11. Système (S) de reconnaissance d'un geste instrumenté exécuté par un utilisateur d'un équipement terminal, **caractérisé en ce qu'**il comprend une base (DBCU) de données de contexte d'usage comprenant des enregistrements de contextes d'usages rencontrés par l'utilisateur, une base de données (DBC) de couples geste/contexte d'usage comprenant des enregistrements de couples (Ck) de gestes et de contexte d'usage reconnus, une probabilité d'apparition (PAk) étant associée audit couple, et un terminal d'utilisateur (ET) selon la revendication **10** apte à transmettre des données auxdites bases et à accéder à leurs enregistrements.

12. Programme d'ordinateur (Pg1) comprenant des instructions pour la mise en oeuvre des étapes du procédé de reconnaissance d'un geste selon l'une des revendications **1** à **8,** lorsqu'il est exécuté par un processeur.

13. Support d'enregistrement lisible par un processeur, sur lequel est enregistré un programme d'ordinateur selon la revendication **12.**

CU

x

G  z

y

ET

**FIG. 1**

CA1

CA2

CA3

ET

NAV

CM

DT

CA4  CA5  CA6  CA7

**FIG. 2**

**2/5**

**FIG. 3**

**A**

| 1 | 2 | ... | n-1 | n |
|---|---|---|---|---|
| $A_1$ | $B_2$ | | $A_{n-1}$ | $B_n$ |
| $B_1$ | $C_2$ | | $A_{n-1}$ | $C_n$ |
| $C_1$ | $C_2$ | | $C_{n-1}$ | $A_n$ |
| $A_1$ | $A_2$ | | $B_{n-1}$ | $A_n$ |
| $A_1$ | $A_2$ | : | $B_{n-1}$ | $C_n$ |
| $C_1$ | $C_2$ | | $B_{n-1}$ | $B_n$ |
| $C_1$ | $B_2$ | | $C_{n-1}$ | $C_n$ |
| $B_1$ | $B_2$ | | $A_{n-1}$ | $C_n$ |
| $B_1$ | $A_2$ | | $C_{n-1}$ | $B_n$ |
| $A_1$ | $C_2$ | | $B_{n-1}$ | $A_n$ |

**B**

| 1 | 2 | ... | n-1 | n |
|---|---|---|---|---|
| $C_1$ | $A_2$ | | $B_{n-1}$ | $A_n$ |
| $C_1$ | $A_2$ | | $C_{n-1}$ | $A_n$ |
| $A_1$ | $B_2$ | | $B_{n-1}$ | $C_n$ |
| $A_1$ | $A_2$ | | $B_{n-1}$ | $C_n$ |
| $A_1$ | $A_2$ | : | $B_{n-1}$ | $C_n$ |
| $C_1$ | $C_2$ | | $A_{n-1}$ | $B_n$ |
| $B_1$ | $B_2$ | | $A_{n-1}$ | $C_n$ |
| $C_1$ | $B_2$ | | $A_{n-1}$ | $A_n$ |
| $C_1$ | $B_2$ | | $A_{n-1}$ | $B_n$ |

**FIG. 4**

Corpus $C$

Fichier $X_N$

$5.1$

$X_i$ 5.4 $c_1$ $l_i$

$X_j$ 5.4 $c_1$ $l_j$

5.3

5.2

$S_1,...,S_n$

$C_i$

5.2

5.2

5.2

$p_1$
$q_1$
$c_p$
$c_2$
$p_1$
$c_1$

$T_{i,j,k}$

**FIG. 5**

Xi

R    B

A    Z₂

Z₁

Xj

R    B'

A'    Z₂

Z₁

**FIG. 6**

n

l

a

b

a'

b'

b''

a''

**FIG. 7**

**FIG. 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120016641 A

**Littérature non-brevet citée dans la description**

- **DE D. H. WILSON et al.** Gesture Récognition using the Xwand. *dans le rapport technique de l'institut de robotique de l'Université Cornelly Melon CMU-RI-04-57,* Avril 2004